# FASCICULE DE BREVET EUROPEEN

(11) **EP 4 419 803 B1**
(45) Date de publication et mention de la délivrance du brevet: **04.06.2025**
(21) Numéro de dépôt: 22773266.6
(22) Date de dépôt: 13.09.2022
(51) Int. Cl.: F16C 11/10, F24S 30/42, F24S 50/60, F16C 17/02, F16C 33/04, H02S 20/32, F16C 41/00

(54) **SUPPORT ROTATIF POUR L'ORIENTATION D'UN ARBRE SUPPORTANT UN PANNEAU SOLAIRE**
DREHSTÜTZE ZUR AUSRICHTUNG EINER EIN SOLARPANEEL TRAGENDEN WELLE
ROTATING SUPPORT FOR THE ORIENTATION OF A SHAFT SUPPORTING A SOLAR PANEL

(30) Priorité: 22.10.2021 US 202163271035 P; 26.10.2021 FR 2111338
(43) Date de publication de la demande: 28.08.2024
(73) Titulaire: A. Raymond et Cie, 38000 Grenoble (FR)
(72) Inventeur: TURLOT, Emmanuel, 38100 GRENOBLE (FR); FRIEDRICH, Christian, LOS OSOS, California 93402 (US)
(74) Mandataire: IP Trust
(86) Numéro de dépôt international: PCT/EP2022/075342
(87) Numéro de publication internationale: WO 2023/066568

(56) Documents cités:
- WO-A1-2020/129091
- US-A1- 2018 013 380
- US-A1- 2020 076 357
- US-A1- 2020 208 881
- US-B1- 9 276 522

## Description

### DOMAINE DE L'INVENTION

La présente invention se rapporte au domaine de l'énergie solaire, et particulièrement aux installations de panneaux solaires. A cet égard, la présente concerne un moyen permettant de limiter, voire prévenir les effets de vortex, sur les panneaux solaires. Notamment, la présente invention propose un support rotatif

### ARRIERE PLAN TECHNOLOGIQUE DE L'INVENTION

Les panneaux solaires sont aujourd'hui avantageusement montés rotatifs selon une ou deux directions de rotation afin de suivre, au moins partiellement, la course du soleil et améliorer le rendement de conversion desdits panneaux.

A cet égard, une installation solaire connue de l'homme du métier, et décrite dans le document [1] cité à la fin de la description, peut comprendre une pluralité de panneaux solaires.

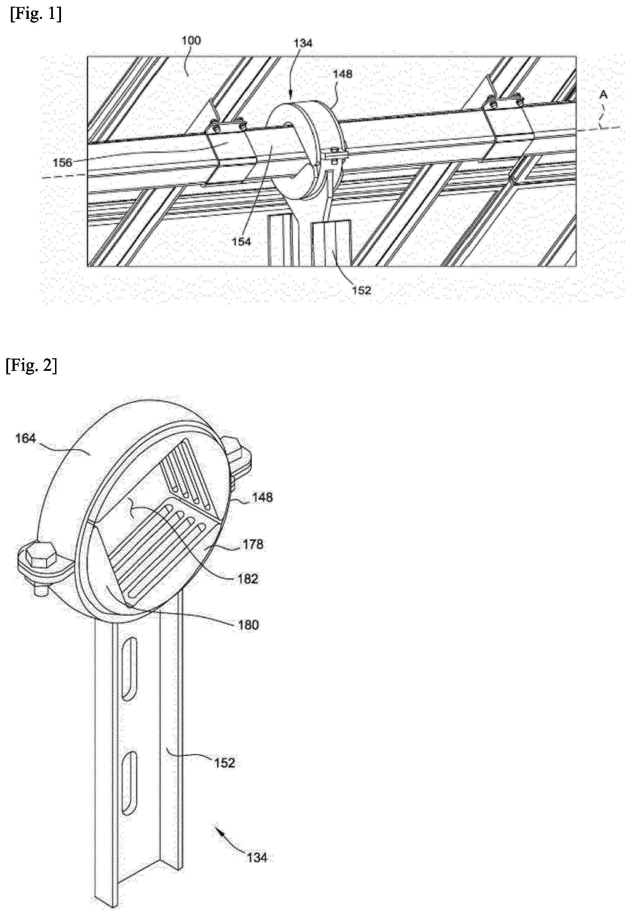

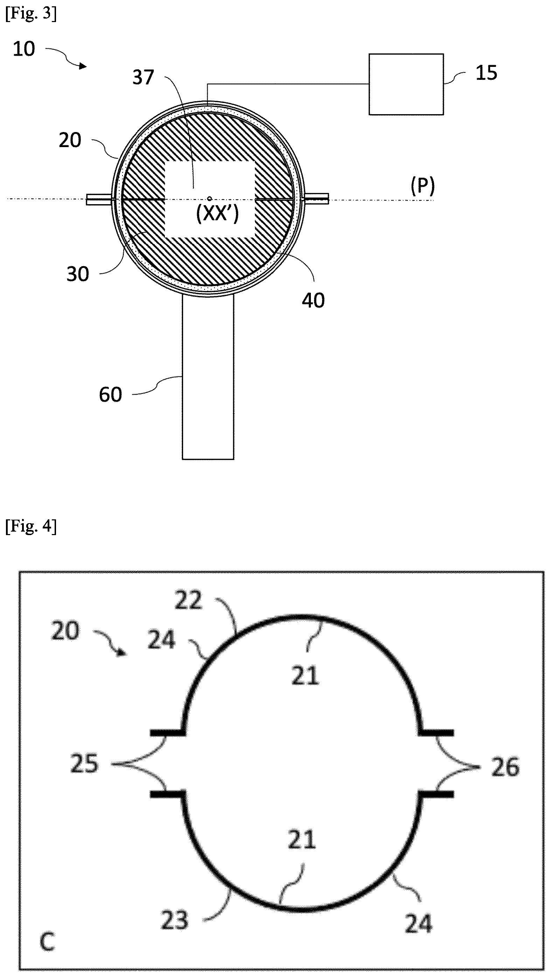

Notamment, et tel qu'illustré à la [Fig.1] (correspondant à la [Fig.3] du document [1]), ces panneaux solaires 100 sont maintenus solidaires les uns des autres au moyen d'un rail de torsion 154 qui s'étend selon une direction principal A.

Le rail de torsion 154 est, dans cet exemple, monté sur un ou plusieurs mâts 152 fixés au sol. Notamment, ce montage met en œuvre des supports rotatifs 148 fixés aux extrémités de chaque mât 152 et configurés pour permettre la rotation du rail de torsion 154, et par voie de conséquence des panneaux solaires 100, autour de l'axe principal A.

Tel qu'illustré à la [Fig.2] (correspondant à la [Fig.4] du document [1] cité à la fin de la description), le support rotatif 148 comprend en particulier un élément rotatif 178 enserré dans un collier de serrage 164. L'élément rotatif 178 est par ailleurs traversé de part en part, selon la direction définie par l'axe principal A, par le rail de torsion 154 ( [Fig.1]).

Un tel agencement permet à l'ensemble formé par l'élément rotatif 178 et le rail de torsion 154 de pivoter autour de l'axe principal A et ainsi permettre aux panneaux solaires mécaniquement solidaires dudit rail de suivre la course du soleil.

Ce mouvement de rotation est notamment imposé par un moteur agissant directement sur le rail de torsion 154.

Une telle installation peut comprendre une fonction de sécurité qui consiste à mettre les panneaux solaires en position horizontale dès lors que le vent dépasse une vitesse critique. Cette fonction permet notamment de réduire la prise au vent desdits panneaux, et par voie de conséquence de limiter les risques d'endommagement de ces derniers.

Cette fonction de sécurité n'est toutefois efficace que lorsque le vent reste parallèle à la surface du sol. En effet, dès lors que le vent forme des vortex, les panneaux solaires portés par le rail de torsion peuvent subir des contraintes, et notamment des contraintes en torsion de grande amplitude, hors de leur plan. Plus particulièrement, et pour certaines vitesses de vent, ces contraintes sont susceptibles de faire entrer en résonance l'ensemble formé par ledit rail et les panneaux solaires, et le cas échéant, du fait des fortes accélérations imposées par ce mouvement de torsion, entrainer un décrochement, voire un arrachement, de certains de ces panneaux.

Afin de pallier ce problème, il a pu être proposé (notamment dans les document [2] et [3] cités à la fin de la description) de mettre en œuvre des amortisseurs mécaniques et/ ou hydrauliques configurés pour limiter les effets des vortex. De manière alternative, le document [4] cité à la fin de la description propose de mettre en œuvre un moyen d'amortissement basé sur un effet de courants de Foucault.

Enfin, le document US2020/0208881 A1 divulgue un support rotatif pour panneaux solaire avec un dispositif de blocage en rotation limité à un couple seuil présélectionné selon le préambule de la revendication 1.

Les moyens décrits ci-avant sont néanmoins compliqués à mettre en œuvre et sont souvent associés à un coût qui n'est pas compatible avec le domaine de l'énergie solaire.

Un but de la présente invention est donc de proposer un dispositif permettant de limiter, voire prévenir, les effets des vortex sur les installations de panneaux solaires.

Plus particulièrement, un but de la présente invention est de proposer un dispositif plus simple à mettre œuvre et surtout compatible avec les installations solaires existantes.

### BREVE DESCRIPTION DE L'INVENTION

La présente invention concerne un support rotatif pour l'orientation d'un arbre supportant un panneau solaire :
- un collier de serrage qui comprend une surface interne présentant une symétrie de révolution autour d'un axe principal ;
- un élément rotatif monté dans le collier de serrage, et pourvu d'une surface périphérique présentant une symétrie de révolution autour de l'axe principal,
- des moyens de friction pilotables, avantageusement mécaniques, configurés pour imposer une friction associée à un premier ou un deuxième couple de friction statique sur la surface périphérique et/ou de la surface interne et s'opposant à la rotation de l'élément rotatif, le premier couple de friction statique étant inférieur au deuxième couple de friction statique.

Selon un mode de mise en œuvre, l'élément rotatif comprend un assemblage de deux sections dites, respectivement, première section et deuxième section, qui, lorsqu'elles sont assemblées pour former l'élément rotatif, sont symétriques l'une de l'autre par rapport à un plan passant par l'axe principal .

Selon un mode de mise en œuvre, l'élément rotatif comprend deux faces principales reliées par la surface périphérique, et par lesquelles débouche un canal de guidage de l'arbre.

Selon un mode de mise en œuvre, le canal de guidage présente une section rectangulaire ou carrée selon un plan de coupe perpendiculaire à l'axe principal.

Selon un mode de mise en œuvre, la surface interne et la surface périphérique présentent une forme sphérique.

Selon un mode de mise en œuvre, les moyens de friction comprennent une membrane gonflable avec un gaz ou un liquide et s'interposant entre la surface périphérique et la surface interne.

Selon un mode de mise en œuvre, la membrane gonflable est solidaire de la surface interne de sorte que les moyens de friction pilotables sont configurés pour imposer le premier ou le deuxième couple de friction statique sur la surface périphérique.

Selon un mode de mise en œuvre, la membrane gonflable est solidaire de la surface périphérique de sorte que les moyens de friction pilotables sont configurés pour imposer le premier ou le deuxième couple de friction statique sur la surface interne.

Selon un mode de mise en œuvre, les moyens de friction comprennent un actionneur configuré pour ajuster le serrage de l'élément rotatif dans le collier de serrage à l'un ou l'autre d'un premier niveau de serrage et d'un deuxième niveau de serrage, le premier et le deuxième niveau de serrage permettant d'imposer, respectivement, le premier et le deuxième couple de friction statique entre la surface périphérique et la surface interne.

Selon un mode de mise en œuvre, le collier de serrage comprend deux sections dites, respectivement, section supérieure et section inférieure assemblées au niveau d'un plan passant par l'axe principal.

Selon un mode de mise en œuvre, le collier de serrage comprend de l'acier galvanisé.

Selon un mode de mise en œuvre, l'élément rotatif comprend de la matière plastique.

Selon un mode de mise en œuvre, le collier de serrage comprend en projection par rapport à sa surface extérieure un élément de maintien de forme longitudinale
L'invention concerne également une installation solaire qui comprend :
- une pluralité de mâts ;
- un arbre qui s'étend selon l'axe principal et qui est solidaire d'une extrémité de chacun des mâts de la pluralité de mâts par l'intermédiaire de supports rotatifs selon la présente invention ;
- un panneau solaire solidaire de l'arbre ;
- une pluralité de moteurs agencés pour imposer un couple de rotation de l'arbre autour de l'axe principal.

Selon un mode de mise en œuvre, le premier couple de friction statique est ajusté pour autoriser la rotation de l'arbre lorsque les moteurs imposent un couple de rotation audit arbre.

### Brève description des dessins

D'autres caractéristiques et avantages de l'invention ressortiront de la description détaillée qui va suivre en référence aux figures annexées sur lesquelles :
[Fig.1] La [Fig.1] correspond à la [Fig.3] du document [1] cité à la fin de la description, notamment la [Fig.1] représente au moins un panneau solaire monté rotatif autour d'un axe principal ;
[Fig.2] La [Fig.2] correspond à la [Fig.4] du document [1] cité à la fin de la description, notamment la [Fig.2] représente un support rotatif décrit dans le document [1] ;
[Fig.3] La [Fig.3] est une représentation schématique d'un support rotatif selon un premier exemple de la présente invention, l'élément rotatif est notamment représenté selon un plan de coupe perpendiculaire à l'axe principal XX' ;
[Fig.4] La [Fig.4] est une représentation du collier de serrage du support rotatif de la [Fig.3], le collier de serrage est notamment représenté selon un plan de coupe C perpendiculaire à l'axe principal XX' ;
[Fig.5] La [Fig.5] est une représentation de l'élément rotatif du support rotatif de la [Fig.3], l'élément rotatif est notamment représenté selon le plan de coupe C ;
[Fig.6] La [Fig.6] est une représentation de l'élément rotatif de la [Fig.5], l'élément rotatif est notamment représenté selon le plan de coupe perpendiculaire au plan de coupe C et passant par l'axe principal XX' ;
[Fig.7] La [Fig.7] est une représentation schématique d'un support rotatif selon un deuxième exemple de la présente invention, l'élément rotatif est notamment représenté selon un plan de coupe perpendiculaire à l'axe principal XX', et les moyens de friction imposent le deuxième couple de friction statique ;
[Fig.8] La [Fig.8] est une représentation schématique d'un support rotatif de la [Fig.7], les moyens de friction imposant le premier couple de friction statique

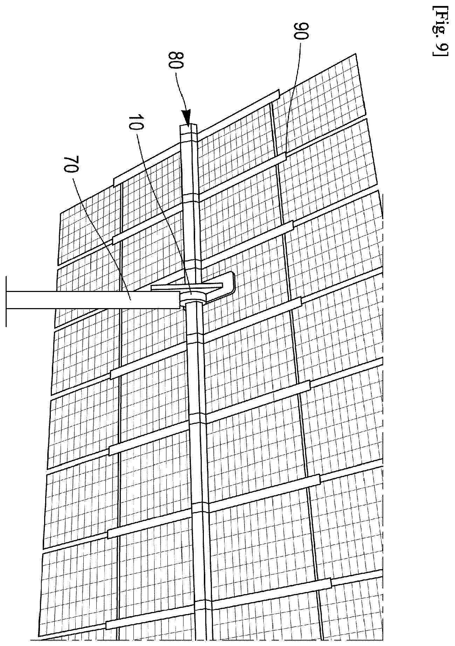

[Fig.9] La [Fig.9] est une photographie d'une installation susceptible de mettre en œuvre le support rotatif selon la présente invention.

### DESCRIPTION DETAILLEE DE L'INVENTION

La présente invention concerne un support rotatif. Plus particulièrement, la présente invention concerne un support rotatif destiné à maintenir un arbre supportant un panneau solaire.

Plus particulièrement le support rotatif comprend :
- un collier de serrage qui comprend une surface interne présentant une symétrie de révolution autour d'un axe principal ;
- un élément rotatif monté dans le collier de serrage, et pourvu d'une surface périphérique présentant une symétrie de révolution autour de l'axe principal,
- des moyens de friction pilotables configurés pour imposer une friction associée à un premier ou un deuxième couple de friction statique sur la surface périphérique et/ou de la surface interne et s'opposant à la rotation de l'élément rotatif, le premier couple de friction statique étant inférieur au deuxième couple de friction statique.

Sur la [Fig.3], on peut voir un premier exemple de support rotatif 10 selon la présente invention.

La support rotatif 10 comprend notamment un collier de serrage 20. Le collier de serrage 20 comprend une surface interne 21 et qui présente une symétrie de révolution autour d'un axe principal XX'.

Le collier de serrage 20 peut comprendre deux sections dites, respectivement, section supérieure 22 et section inférieure 23 assemblées au niveau d'un plan P passant par l'axe principal XX' ([Fig.4]).

Plus particulièrement, chaque section du collier de serrage 20 comprend une partie centrale 24 et deux parties terminales, dites respectivement, première partie terminale 25 et deuxième partie terminale 26.

La partie centrale 24 forme un demi-cercle selon un plan de coupe C perpendiculaire à l'axe principal XX'. Les parties terminales forment des languettes parallèles au plan P et terminent latéralement la partie centrale. En d'autres termes, la partie centrale est disposée entre la première partie terminale 25 et la deuxième partie terminale 26.

Les parties terminales permettent de maintenir assemblées la section supérieure 22 et la section inférieure 23. Notamment, les premières parties terminales de chacune des sections sont en appui l'une contre l'autre et maintenues entre elles par des moyens de fixation. De manière équivalente, les deuxièmes parties terminales de chacune des sections sont en appui l'une contre l'autre et maintenues entre elles par des moyens de fixation. Les moyens de fixation peuvent par exemple comprendre des vis, ou des systèmes boulon/écrou.

Le collier de serrage 20 peut comprendre de l'acier galvanisé.

Le collier de serrage 20 peut comprendre en projection par rapport à sa surface extérieure un élément de maintien 60 de forme longitudinale. L'élément de maintien 60 est notamment configuré pour fixer le support rotatif 10 sur un mât.

Le support rotatif 10 comprend également un élément rotatif 30 monté dans le collier de serrage 20. Plus particulièrement, l'élément rotatif 30 est monté rotatif autour de l'axe principal XX'. A cet égard, la surface périphérique 31 présente une symétrie de révolution autour de l'axe principal XX'.

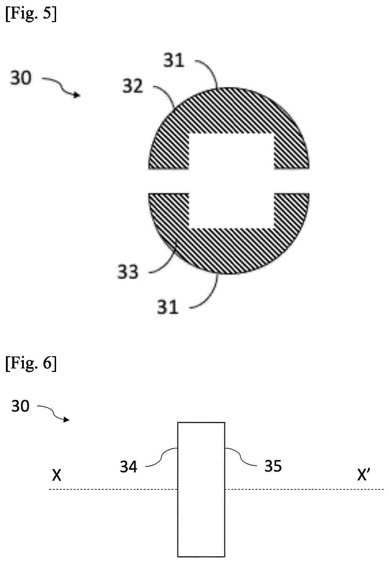

De manière avantageuse, l'élément rotatif 30 peut comprendre un assemblage de deux sections dites, respectivement, première section 32 et deuxième section 33, qui, lorsqu'elles sont assemblées pour former l'élément rotatif 30, sont symétriques l'une de l'autre par rapport à un plan passant par l'axe principal XX' ([Fig.5]).

Par ailleurs, l'élément rotatif 30 comprend deux faces principales 34, 35 reliées par la surface périphérique 31, et par lesquelles débouche un canal de guidage 37 de l'arbre ( [Fig.3] et [Fig.6]). Il est entendu que les faces principales 34, 35 sont parallèles l'une de l'autre.

Le canal de guidage 37 peut présenter une section rectangulaire ou carrée selon un plan de coupe perpendiculaire à l'axe principal XX'.

L'élément rotatif 30 peut comprendre un matériau plastique, par exemple un matériau thermoplastique, et plus favorablement un polyamide, un polypropylène, un polyéthylène haute densité.

Plus particulièrement, l'élément rotatif 30 peut être fait de matériaux de densité différente. A titre d'exemple, l'élément rotatif 30 peut comprendre un couche périphérique faite d'un matériaux présentant une première densité, et enveloppant une partie principale faite d'un matériau présentant une deuxième densité supérieure à la première densité.

Le support rotatif 10 comprend également des moyens de friction pilotables configurés pour imposer une friction associée un premier ou un deuxième couple de friction statique sur la surface périphérique et/ou de la surface interne et s'opposant à la rotation de l'élément rotatif, le premier couple de friction statique étant inférieur au deuxième couple de friction statique.

Par « pilotable », on entend qu'il existe un contrôleur 15 qui permet de commander les moyens de friction en vue d'imposer l'un ou l'autre du premier et du deuxième couple de friction statique.

Un couple de friction statique est, selon les termes de la présente invention, un couple d'effort qui s'oppose au couple moteur de rotation, que celui-ci provienne d'un moteur électrique ou de l'action du vent sur les panneaux.

Selon ce premier exemple, les moyens de friction comprennent une membrane gonflable 40 avec un gaz ou un liquide et qui est disposée entre la surface périphérique 31 et la surface interne 21. A cet égard, la membrane gonflable 40 peut présenter deux états dit, respectivement, premier état et deuxième état. Notamment, le premier état et le deuxième état sont adaptés pour imposer, respectivement, le premier couple de friction statique et le deuxième couple de friction statique. Notamment, l'un et l'autre du premier état et du deuxième état sont le résultat d'une quantité de gaz ou de liquide injectée dans la membrane. En particulier, cette quantité de gaz ou de liquide peut être ajustée au moyen du contrôleur 15.

Selon une première variante de ce premier exemple, la membrane gonflable 40 est solidaire de la surface interne de sorte que les moyens de friction pilotables sont configurés pour imposer le premier ou le deuxième couple de friction statique sur la surface périphérique 31.

Selon une seconde variante de ce premier exemple, la membrane gonflable 40 est solidaire de la surface périphérique 31 de sorte que les moyens de friction pilotables sont configurés pour imposer le premier ou le deuxième couple de friction statique sur la surface interne 21.

Selon une troisième variante de ce premier exemple, la membrane gonflable 40 peut être positionnée entre la surface interne 21 et la surface périphérique 31 sans pour autant être solidaire de l'une ou l'autre de ces deux surfaces. Selon cette configuration, une friction s'exerce, d'une part, entre la membrane gonflable 40 et la surface interne 21, et d'autre part entre la membrane gonflable 40 et la surface périphérique 31.

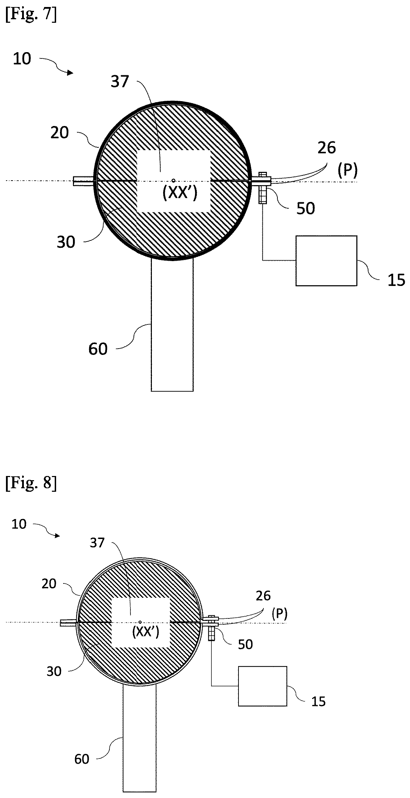

Sur la [Fig.7], on peut voir un deuxième exemple de support rotatif 10 selon la présente invention.

Ce deuxième exemple diffère du premier exemple en ce que les moyens de friction comprennent un actionneur 50 configuré pour ajuster le serrage de l'élément rotatif dans le collier de serrage à l'un ou l'autre d'un premier niveau de serrage et d'un deuxième niveau de serrage, le premier et le deuxième niveau de serrage permettant d'imposer, respectivement, le premier et le deuxième couple de friction statique entre la surface périphérique 31 et la surface interne 21.

En particulier, et selon l'exemple illustré à la [Fig.7], l'actionneur 50 peut être configuré pour ajuster le niveau de serrage du collier de serrage et tendant à rapprocher ou écarter les deuxièmes parties terminales 26 l'une de l'autre.

A cet égard, la [Fig.7] et la [Fig.8] représentent le support rotatif 10 avec un écartement des deuxièmes parties terminales 26 différents. Notamment, à la [Fig.7] les deuxièmes parties terminales 26 présentent un écartement inférieur à celui représenté à la [Fig.8]. La gestion de l'écartement des deuxièmes parties terminales 26 permet d'imposer l'un ou l'autre du premier ou du deuxième couple de friction statique entre la surface périphérique et la surface interne.

Un tel support rotatif est avantageusement mis en œuvre pour le maintien et l'orientation d'un arbre supportant au moins un panneau solaire.

Ainsi, l'invention concerne également une installation solaire.

L'installation solaire comprend notamment au moins un mât 70 présentant une extrémité libre. Les extrémités libres de chacun des mats 70 sont en particulier alignées selon une direction parallèle à l'axe principal XX'.

L'installation comprend également une pluralité de supports rotatifs 10. Plus particulièrement, support rotatif 10 est fixé à une extrémité libre d'un mât 70 de sorte que le canal de guidage desdits supports rotatifs soient alignés selon l'axe principal XX'.

L'installation comprend en outre un arbre 80 qui s'étend selon l'axe principal XX'. En d'autres termes, l'arbre traverse l'ensemble des canaux de guidage.

Au moins un panneau solaire 90 est fixé sur l'arbre 80.

Enfin, l'installation comprend une pluralité de moteurs agencés pour imposer un couple de rotation de l'arbre autour de l'axe principal XX'.

De manière avantageuse, la surface interne et la surface périphérique présentent une forme sphérique. Ce dernier aspect permet d'accommoder les désalignements légers entre les différents éléments formant l'installation solaire.

En fonctionnement, les moteurs permettent, lorsqu'ils sont activés, d'imposer un mouvement de rotation à l'arbre de manière à orienter le ou les panneaux solaires face au soleil. Lors de cette rotation, les moyens de friction imposent une friction égale au premier couple de friction statique de manière à limiter l'effort sur les moteurs. Par exemple, le premier couple de friction peut être inférieur à 1% du couple moteur.

Dès lors que le panneau solaire est selon l'orientation souhaitée, le ou les moteurs sont désactivés et les moyens de friction imposent une friction égale au deuxième couple de friction statique de manière à limiter l'effort sur les moteurs. Par exemple, le deuxième couple de friction peut être supérieur à 10% du couple moteur

Ce deuxième état permet d'amortir les effets vortex en limitant les mouvements de rotation (et/ou oscillation autour de l'axe principal XX') des panneaux.

Bien sûr, l'invention n'est pas limitée aux modes de réalisation décrits et on peut y apporter des variantes de réalisation sans sortir du cadre de l'invention tel que défini par les revendications.

### Références

[1] US 2020/0076357 A1 ;
[2] US 2018/0013380 A1 ;
[3] US 2020/0244216 A1 ;
[4] EP3608605B1.

## Revendications

1. Support rotatif (10) pour l'orientation d'un arbre supportant un panneau solaire :
- un collier de serrage (20) qui comprend une surface interne (21) présentant une symétrie de révolution autour d'un axe principal ;
- un élément rotatif (30) monté dans le collier de serrage (20), et pourvu d'une surface périphérique présentant une symétrie de révolution autour de l'axe principal,
- des moyens de friction pilotables, avantageusement mécaniques,
**caractérisé en ce que**
les moyens de friction pilotables sont
configurés pour imposer une friction associée à un premier ou un deuxième couple de friction statique sur la surface périphérique et/ou sur la surface interne (21) et s'opposant à la rotation de l'élément rotatif (30), le premier couple de friction statique étant inférieur au deuxième couple de friction statique.

2. Support rotatif (10) selon la revendication 1, dans lequel l'élément rotatif (30) comprend un assemblage de deux sections dites, respectivement, première section et deuxième section, qui, lorsqu'elles sont assemblées pour former l'élément rotatif (30), sont symétriques l'une de l'autre par rapport à un plan passant par l'axe principal .

3. Support rotatif (10) selon la revendication 1 ou 2, dans lequel l'élément rotatif (30) comprend deux faces principales reliées par la surface périphérique, et par lesquelles débouche un canal de guidage (37) de l'arbre.

4. Support rotatif (10) selon la revendication 3, dans lequel le canal de guidage (37) présente une section rectangulaire ou carrée selon un plan de coupe perpendiculaire à l'axe principal.

5. Support rotatif (10) selon l'une des revendication 1 à 4, dans lequel la surface interne (21) et la surface périphérique présentent une forme sphérique.

6. Support rotatif (10) selon l'une des revendications 1 à 5, dans lequel les moyens de friction comprennent une membrane gonflable (40) avec un gaz ou un liquide et s'interposant entre la surface périphérique et la surface interne (21).

7. Support rotatif (10) selon la revendication 6, dans lequel la membrane gonflable (40) est solidaire de la surface interne (21) de sorte que les moyens de friction pilotables sont configurés pour imposer le premier ou le deuxième couple de friction statique sur la surface périphérique.

8. Support rotatif (10) selon la revendication 6, dans lequel la membrane gonflable (40) est solidaire de la surface périphérique de sorte que les moyens de friction pilotables sont configurés pour imposer le premier ou le deuxième couple de friction statique sur la surface interne (21).

9. Support rotatif (10) selon l'une des revendications 1 à 5, dans lequel les moyens de friction comprennent un actionneur configuré pour ajuster le serrage de l'élément rotatif (30) dans le collier de serrage (20) à l'un ou l'autre d'un premier niveau de serrage et d'un deuxième niveau de serrage, le premier et le deuxième niveau de serrage permettant d'imposer, respectivement, le premier et le deuxième couple de friction statique entre la surface périphérique et la surface interne (21).

10. Support rotatif (10) selon la revendication 9, dans lequel le collier de serrage (20) comprend deux sections dites, respectivement, section supérieure (22) et section inférieure (23) assemblées au niveau d'un plan passant par l'axe principal.

11. Support rotatif (10) selon l'une des revendications 1 à 10, dans lequel le collier de serrage (20) comprend de l'acier galvanisé.

12. Support rotatif (10) selon l'une des revendications 1 à 11, dans lequel l'élément rotatif (30) comprend de la matière plastique.

13. Support rotatif (10) selon l'une des revendications 1 à 12, dans lequel le collier de serrage (20) comprend en projection par rapport à sa surface extérieure un élément de maintien (37) de forme longitudinale.

14. Installation solaire qui comprend :
- une pluralité de mâts ;
- un arbre qui s'étend selon l'axe principal et qui est solidaire d'une extrémité de chacun des mâts de la pluralité de mâts par l'intermédiaire de supports rotatifs selon l'une des revendications 1 à 13 ;
- un panneau solaire solidaire de l'arbre ;
- une pluralité de moteurs agencés pour imposer un couple de rotation de l'arbre autour de l'axe principal.

15. Installation solaire selon la revendication 14, dans laquelle le premier couple de friction statique est ajusté pour autoriser la rotation de l'arbre lorsque les moteurs imposent un couple de rotation audit arbre.

## Patentansprüche

1. Drehbare Halterung (10) zur Ausrichtung einer Welle, die ein Solarmodul trägt:
- eine Klemmschelle (20), die eine Innenfläche (21) mit einer Rotationssymmetrie um eine Hauptachse umfasst;
- ein drehbares Element (30), das in der Klemmschelle (20) montiert ist und mit einer Umfangsfläche versehen ist, die eine Rotationssymmetrie um die Hauptachse aufweist,
- steuerbare, vorzugsweise mechanische Reibungsmittel, **dadurch gekennzeichnet, dass** die steuerbaren Reibungsmittel so eingerichtet sind, dass sie eine Reibung im Zusammenhang mit einem ersten einem oder zweiten statischen Reibungsmoment auf die Umfangsfläche und/oder auf die Innenfläche (21) aufbringen und der Drehung des Drehelements (30) entgegenwirken, wobei das erste statische Reibungsmoment kleiner als das zweite statische Reibungsmoment ist.

2. Drehbare Halterung (10) nach Anspruch 1, wobei das Drehelement (30) eine Baugruppe aus zwei Abschnitten umfasst, die als erster Abschnitt bzw. zweiter Abschnitt bezeichnet werden, die, wenn sie zusammengefügt werden, um das Drehelement (30) zu bilden, symmetrisch zueinander in Bezug auf eine Ebene sind, die durch die Hauptachse verläuft.

3. Drehbare Halterung (10) nach Anspruch 1 oder 2, wobei das Drehelement (30) zwei Hauptflächen umfasst, die durch die Umfangsfläche verbunden sind, und durch die ein Führungskanal (37) der Welle mündet.

4. Drehbare Halterung (10) nach Anspruch 3, wobei der Führungskanal (37) einen rechteckigen oder quadratischen Querschnitt in einer Schnittebene senkrecht zur Hauptachse aufweist.

5. Drehbare Halterung (10) nach einem der Ansprüche 1 bis 4, wobei die Innenfläche (21) und die Umfangsfläche eine sphärische Form aufweisen.

6. Drehbare Halterung (10) nach einem der Ansprüche 1 bis 5, wobei die Reibungsmittel eine mit einem Gas oder einer Flüssigkeit aufblasbare Membran (40) umfassen und sich zwischen der Umfangsfläche und der Innenfläche (21) einfügen.

7. Drehbare Halterung (10) nach Anspruch 6, wobei die aufblasbare Membran (40) mit der Innenfläche (21) fest verbunden ist, so dass die steuerbaren Reibungsmittel so eingerichtet sind, dass sie das erste oder zweite statische Reibungsmoment auf die Umfangsfläche aufbringen.

8. Drehbare Halterung (10) nach Anspruch 6, wobei die aufblasbare Membran (40) mit der Umfangsfläche fest verbunden ist, so dass die steuerbaren Reibungsmittel so eingerichtet sind, dass sie das erste oder zweite statische Reibungsmoment auf die Innenfläche (21) aufbringen.

9. Drehbare Halterung (10) nach einem der Ansprüche 1 bis 5, wobei die Reibungsmittel einen Stellantrieb umfassen, der so eingerichtet ist, dass er die Klemmung des Drehelements (30) in der Klemmschelle (20) an die eine der die andere einer ersten Klemmstufe und einer zweiten Klemmstufe anpasst, wobei die erste und die zweite Klemmstufe es ermöglichen, das erste bzw. das zweite statische Reibungsmoment zwischen der Umfangsfläche und der Innenfläche (21) aufzubringen.

10. Drehbare Halterung (10) nach Anspruch 9, wobei die Klemmschelle (20) zwei Abschnitte umfasst, die als oberer Abschnitt (22) bzw. unterer Abschnitt (23) bezeichnet werden, die in einer Ebene zusammengefügt sind, die durch die Hauptachse verläuft.

11. Drehbare Halterung (10) nach einem der Ansprüche 1 bis 10, wobei die Klemmschelle (20) verzinkten Stahl umfasst.

12. Drehbare Halterung (10) nach einem der Ansprüche 1 bis 11, wobei das Drehelement (30) Kunststoff umfasst.

13. Drehbare Halterung (10) nach einem der Ansprüche 1 bis 12, wobei die Klemmschelle (20) in Projektion zu ihrer Außenfläche ein längsförmiges Halteelement (37) umfasst.

14. Solaranlage, die Folgendes umfasst:
- eine Vielzahl von Masten;
- eine Welle, die sich entlang der Hauptachse erstreckt und die über Drehhalterungen nach einem der Ansprüche 1 bis 13 fest mit einem Ende jedes der Vielzahl von Masten verbunden ist;
- ein Solarpanel, das fest mit der Welle verbunden ist;
- eine Vielzahl von Motoren, die so angeordnet sind, dass sie der Welle ein Drehmoment zur Drehung um die Hauptachse aufbringen.

15. Solaranlage nach Anspruch 14, wobei das erste statische Reibungsmoment so eingestellt wird, dass es die Drehung der Welle zulässt, wenn die Motoren ein Drehmoment an dieser Welle aufbringen.

## Claims

1. Rotating support (10) for the orientation of a shaft supporting a solar panel:
- a clamp (20) which comprises an internal surface (21) that is rotationally symmetrical about a main axis;
- a rotating element (30) mounted in the clamp (20), and provided with a peripheral surface that is rotationally symmetrical about the main axis,
- controllable, advantageously mechanical, friction means, **characterised in that** the controllable friction means are configured to impose a friction associated with a first or a second static friction torque on the peripheral surface and/or the internal surface (21) and opposing the rotation of the rotating element (30), the first static friction torque being less than the second static friction torque.

2. Rotating support (10) according to claim 1, wherein the rotating element (30) comprises an assembly of two sections called, respectively, first section and second section, which, when they are assembled to form the rotating element (30), are symmetrical to one another with respect to a plane passing through the main axis.

3. Rotating support (10) according to claim 1 or 2, wherein the rotating element (30) comprises two main faces connected by the peripheral surface, and through which a guide channel (37) of the shaft opens.

4. Rotating support (10) according to claim 3, wherein the guide channel (37) has a rectangular or square cross-section along a cutting plane perpendicular to the main axis.

5. Rotating support (10) according to any one of claims 1 to 4, wherein the internal surface (21) and the peripheral surface have a spherical shape.

6. Rotating support (10) according to any one of claims 1 to 5, wherein the friction means comprise a membrane (40), inflatable with a gas or a liquid, and being interposed between the peripheral surface and the internal surface (21).

7. Rotating support (10) according to claim 6, wherein the inflatable membrane (40) is integral with the internal surface (21), such that the controllable friction means are configured to impose the first or the second static friction torque on the peripheral surface.

8. Rotating support (10) according to claim 6, wherein the inflatable membrane (40) is integral with the peripheral surface, such that the controllable friction means are configured to impose the first or the second static friction torque on the internal surface (21).

9. Rotating support (10) according to any one of claims 1 to 5, wherein the friction means comprise an actuator, configured to adjust the clamping of the rotating element (30) within the clamp (20) to either a first clamping level or a second clamping level, the first and second clamping levels being able to impose, respectively, the first and second static friction torque between the peripheral surface and the internal surface (21).

10. Rotating support (10) according to claim 9, wherein the clamp (20) comprises two sections called, respectively, upper section (22) and lower section (23) assembled on a plane passing through the main axis.

11. Rotating support (10) according to any one of claims 1 to 10, wherein the clamp (20) comprises galvanised steel.

12. Rotating support (10) according to any one of claims 1 to 11, wherein the rotating element (30) comprises plastic material.

13. Rotating support (10) according to any one of claims 1 to 12, wherein the clamp (20) comprises, projecting with respect to its outer surface, a holding element (37) of longitudinal shape.

14. Solar installation, which comprises:
- a plurality of masts;
- a shaft which extends along the main axis and which is integral with one end of each of the masts of the plurality of masts through rotating supports according to any one of claims 1 to 13;
- a solar panel integral with the shaft;
- a plurality of motors arranged to impose a rotational torque on the shaft about the main axis.

15. Solar installation according to claim 14, wherein the first static friction torque is adjusted to enable the rotation of the shaft when the motors impose a rotational torque on said shaft.
